# EUROPÄISCHE PATENTANMELDUNG

(11) **EP 2 184 657 A2**
(43) Veröffentlichungstag der Anmeldung: **12.05.2010**
(21) Anmeldenummer: 09174992.9
(22) Anmeldetag: 04.11.2009
(51) Int. Cl.: G05B 19/401

(54) **Verfahren zur Bestimmung der Nulllage einer mehrachsigen Bearbeitungsmaschine**

(30) Priorität: 05.11.2008 DE 102008055933
(71) Anmelder: MTU Aero Engines GmbH, 80995 München (DE)
(72) Erfinder: Geisel, Mark, 82131 Gauting (DE); Scherer, Johann, 85250 Altomünster (DE)

(57) **Zusammenfassung**

Die Erfindung betrifft ein Verfahren zur Bestimmung der Nulllage einer mehrachsigen Bearbeitungsmaschine, nämlich zur Bestimmung der Relativposition zwischen einem in einem theoretischen Nullpunkt der Bearbeitungsmaschine aufgespannten Maschinenkoordinatensystcm und einem in einem physikalischen Nullpunkt der Bcarbcitungsmaschinc aufgespannten Referenzkoordinatensystem, mit zumindest den folgenden Schritten: a) Einspannen eines Referenzkörpers in die Bearbeitungsmaschine, wobei eine theoretische Relativposition zwischen dem Referenzkoordinatensystem und dem Maschinenkoordinatensystem bekannt ist; b) Bearbeiten des Referenzkörpers mit einem Werkzeug der Bearbeitungsmaschine an mindestens sechs Sollpositionen, die über mindestens drei jeweils nichtparallele Ebenen des Referenzkörpers verteilt sind; c) Vermessen des Referenzkörpers an den mindestens sechs bearbeiteten Istpositionen; d) Errechnen der tatsächlichen Relativposition zwischen dem Referenzkoordinatensystem und dem Maschinenkoordinatensystem aus den Sollpositionen und Istpositionen der Bearbeitung des Referenzkörpers.

## Beschreibung

Die Erfindung betrifft ein Verfahren zur Bestimmung der Nulllage einer mehrachsigen Bearbeitungsmaschine, nämlich zur Bestimmung der Relativposition zwischen einem in einem theoretischen Nullpunkt der Bearbeitungsmaschine aufgespannten Maschinenkoordinatensystem und einem in einem physikalischen Nullpunkt der Bearbeitungsmaschine aufgespannten Referenzkoordinatensystem.

Um an einer mehrachsigen Bearbeitungsmaschine, z. B. an einer fünfachsigen oder sechsachsigen Schleifmaschine, eine ordnungsgemäße Bearbeitung von Werkstücken zu ermöglichen, muss die Relativposition zwischen einem Maschinenkoordinatensystem, welches in einem theoretischen Nullpunkt der Bearbeitungsmaschine aufgespannt ist, und einem Referenzkoordinatensystem, welches in einem physikalischen Nullpunkt der Bearbeitungsmaschine aufgespannt ist, bekannt sein, da bei der Bearbeitungsprogrammierung an einer solchen Bearbeitungsmaschine die genaue Kenntnis der Relativposition zwischen dem Maschinenkoordinatensystem und dem Referenzkoordinatensystem von entscheidender Bedeutung ist.

Unterliegt der physikalische Nullpunkt z. B. durch Temperatureinflüsse oder Maschinenkollisionen einem Drift, so verschiebt sich die Relativposition zwischen dem Maschinenkoordinatensystem und dem Referenzkoordinatensystem, wobei dann, wenn dieser Verschiebung keine Rechnung getragen wird, bei der Bearbeitung von Werkstücken auf der Bearbeitungsmaschine Ausschuss erzeugt wird. Es ist daher von entscheidender Bedeutung, den tatsächlichen physikalischen Nullpunkt einer Bearbeitungsmaschine exakt zu kennen, damit eine exakte Relativposition zwischen dem Maschinenkoordinatensystem und dem Referenzkoordinatensystem bekannt ist.

Bislang sind aus der Praxis keine Verfahren bekannt, die eine schnelle und effiziente Bestimmung der Nulllage einer mehrachsigen Bearbeitungsmaschine, nämlich eine effiziente und schnelle Bestimmung der Relativposition zwischen dem Maschinenkoordinatensystem und dem Referenzkoordinatensystem, ermöglichen.

Hiervon ausgehend liegt der vorliegenden Erfindung das Problem zu Grunde, ein neuartiges Verfahren zur Bestimmung der Nulllage einer mehrachsigen Bearbeitungsmaschine vorzuschlagen.

Dieses Problem wird durch ein Verfahren gemäß Anspruch 1 gelöst. Erfindungsgemäß erfolgt die Bestimmung der Relativposition zwischen dem in einem theoretischen Nullpunkt der Bearbeitungsmaschine aufgespannten Maschinenkoordinatensystem und dem in einem physikalischen Nullpunkt der Bearbeitungsmaschine aufgespannten Referenzkoordinatensystem mit zumindest den folgenden Schritten: a) Einspannen eines Referenzkörpers in die Bearbeitungsmaschine, wobei eine theoretische Relativposition zwischen dem Referenzkoordinatensystem und dem Maschinenkoordinatensystem bekannt ist; b) Bearbeiten des Referenzkörpers mit einem Werkzeug der Bearbeitungsmaschine an mindestens sechs Sollpositionen, die über mindestens drei jeweils nichtparallele Ebenen des Referenzkörpers verteilt sind; c) Vermessen des Referenzkörpers an den mindestens sechs bearbeiteten Istpositionen; d) Errechnen der tatsächlichen Relativposition zwischen dem Referenzkoordinatensystem und dem Maschinenkoordinatensystem aus den Sollpositionen und Istpositionen der Bearbeitung des Referenzkörpers.

Mit der hier vorliegenden Erfindung ist eine schnelle und effiziente Bestimmung der Nulllage an einer mehrachsigen Bearbeitungsmaschine möglich. Ein durch z. B. Maschinenkollisionen oder Temperatureinflüsse auftretender Drift des physikalischen Nullpunkts der Bearbeitungsmaschine kann schnell und einfach erfasst werden. Dies erfolgt erfindungsgemäß durch Bearbeiten und Vermessen eines Referenzkörpers an definierten Positionen desselben, nämlich an mindestens sechs Positionen, die über mindestens drei nicht parallele Ebenen des Bearbeitungskörpers verteilt sind.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte Darstellung zur Verdeutlichung einer ersten Variante des erfindungsgemäßen Verfahrens zur Bestimmung der Nulllage einer mehrachsigen Bearbeitungsmaschine, und
- Fig. 2: eine schematisierte Darstellung zur Verdeutlichung einer zweiten Variante des erfindungsgemäßen Verfahrens zur Bestimmung der Nulllage einer mehrachsigen Bearbeitungsmaschine.

Die hier vorliegende Erfindung betrifft ein Verfahren zur Bestimmung der Nulllage einer mehrachsigen Bearbeitungsmaschine.

Bei der Bearbeitungsmaschine handelt es sich insbesondere um eine fünfachsige oder eine sechsachsige Bearbeitungsmaschine wie z. B. um eine Schleifmaschine. Dann, wenn das Verfahren an einer fünfachsigen Bearbeitungsmaschine zum Einsatz kommt, verfügt die Bearbeitungsmaschine über drei Linearachsen sowie zwei Rotationsachsen. Dann hingegen, wenn das erfindungsgemäße Verfahren an einer sechsachsigen Bearbeitungsmaschine zum Einsatz kommt, verfügt die Bearbeitungsmaschine über drei Linearachsen und drei Rotationsachsen.

Zur Bestimmung der Nulllage einer mehrachsigen Bearbeitungsmaschine, nämlich zur Bestimmung der Relativposition zwischen einem in einem theoretischen Nullpunkt der Bearbeitungsmaschine aufgespannten Maschinenkoordinatensystem und einem in einem physikalischen Nullpunkt der Bearbeitungsmaschine aufgespannten Referenzkoordinatensystem, wird in mehreren aufeinander folgenden Schritten wie folgt vorgegangen.

In einem ersten Schritt des erfindungsgemäßen Verfahrens wird ein Referenzkörper in der Bearbeitungsmaschine eingespannt, wobei eine theoretische Relativposition zwischen dem Referenzkoordinatensystem der Bearbeitungsmaschine, welches dem Koordinatensystem des Referenzkörpers entspricht, und dem Maschinenkoordinatensystem bekannt ist. An dieser Stelle sei darauf hingewiesen, dass das Maschinenkoordinatensystem auch als G54-Koordinatensystem bezeichnet wird.

Anschließend an das Einspannen des Referenzkörpers in der Bearbeitungsmaschine erfolgt in einem zweiten Schritt des erfindungsgemäßen Verfahrens ein Bearbeiten des Referenzkörpers mit einem Werkzeug der Bearbeitungsmaschine an mindestens sechs Sollpositionen, wobei die Sollpositionen über mindestens drei jeweils nicht parallele Ebenen des Referenzkörpers verteilt sind.

Im Anschluss an das Bearbeiten des Referenzkörpers an den sechs Sollpositionen wird in einem dritten Schritt des erfindungsgemäßen Verfahrens der Referenzkörper vermessen, nämlich an mindestens sechs bearbeiteten Istpositionen.

In einem vierten Schritt des erfindungsgemäßen Verfahrens wird die tatsächliche Relativposition zwischen dem Referenzkoordinatensystem und dem Maschinenkoordinatensystem aus den Sollpositionen und den Istpositionen der Bearbeitung des Referenzkörpers errechnet.

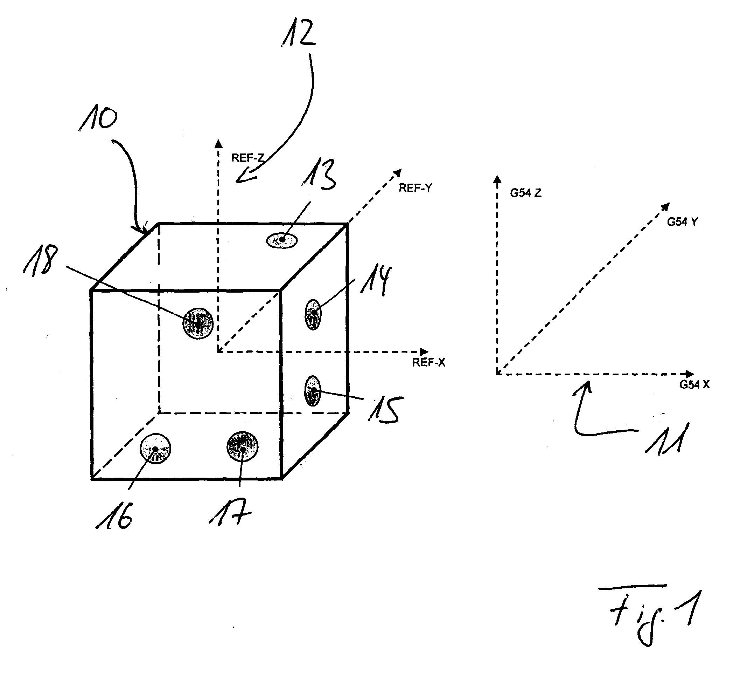

Fig. 1 verdeutlicht das erfindungsgemäße Verfahren für ein konkretes Ausführungsbeispiel der Erfindung, bei welchem unter Verwendung eines als Quader ausgebildeten Referenzkörpers 10 eine Relativposition zwischen einem die Achsen G54 X, G54 Y und G54 Z umfassenden Maschinenkoordinatensystem und einem die Achsen REF-X, REF-Y und REF-Z umfassenden Referenzkoordinatensystem 12 bestimmt werden soll.

In Fig. 1 sind insgesamt sechs Sollpositionen 13, 14, 15, 16, 17 und 18 für die Bearbeitung des Referenzkörpers 10 auf der Bearbeitungsmaschine gezeigt, wobei die sechs Referenzpositionen 13 bis 18 im gezeigten Ausführungsbeispiel derart über drei nicht parallele Ebenen bzw. Bearbeitungsflächen des Referenzkörpers 10 verteilt sind, dass der Referenzkörper 10 in einer ersten Ebene an einer ersten Sollposition 13, in einer zweiten Ebene an zwei Sollpositionen 14 und 15 und in einer dritten Ebene an drei Sollpositionen 16, 17 und 18 bearbeitet wird. Die drei Ebenen, über die die Referenzpositionen 13 bis 18 verteilt sind, verlaufen jeweils senkrecht zueinander.

Konkret kann hierbei so vorgegangen werden, dass der Referenzkörper in einer fünfachsigen Bearbeitungsmaschine zunächst im Bereich der Sollposition 13 bearbeitet wird. Anschließend wird der Referenzkörper 12 um seine Y-Achse und Z-Achse jeweils um 90° geschwenkt, wobei anschließend derselbe im Bereich der Referenzpunkte 16, 17 und 18 bearbeitet wird. Darauffolgend wird dann der Referenzkörper 10 um seine Z-Achse abermals um 90° geschwenkt, wobei dann die Bearbeitung des Referenzkörpers 10 an den Sollpositionen 14 und 15 durchgeführt wird.

Es sei darauf hingewiesen, dass die konkrete Reihenfolge in der Bearbeitung des Referenzkörpers 10 an den Sollpositionen 13 bis 18 in erster Linie von den kinematischen Bewegungsmöglichkeiten der Bearbeitungsmaschine abhängt, so dass demnach auch eine andere Reihenfolge für die Bearbeitung des Referenzköpers im Bereich der Sollpositionen 13 bis 18 gewählt werden kann.

Obwohl die Verteilung der sechs Sollpositionen 13 bis 18 auf die drei nicht parallelen Ebenen bzw. Bearbeitungsflächen des Referenzkörpers 10 im Sinne der obigen 3/2/1-Verteilung bevorzugt ist, können dieselben auch im Sinne einer 2/2/2-Verteilung oder im Sinne einer 4/1/1-Verteilung über drei nicht parallele Ebenen des Referenzkörpers 10 verteilt werden.

Bei einer 2/2/2-Verteilung sind jeweils drei nicht parallelen Ebenen jeweils zwei Sollpositionen zugeordnet. Bei einer 4/1/1-Verteilung sind jeweils zwei nicht parallelen Ebenen jeweils eine Sollposition und einer dritten nicht parallelen Ebene vier Sollpositionen zugeordnet.

Im bevorzugten Ausführungsbeispiel wird zwischen den Bearbeitungen des Referenzkörpers in den unterschiedlichen Ebenen der Referenzkörper jeweils um mindestens eine Achse gedreht, wohingegen das Werkzeug der Bearbeitungsmaschine nicht gedreht wird, sondern vielmehr zur Bearbeitung des Referenzkörpers im Bereich seiner Sollpositionen linear zum Referenzkörper 10 verlagert wird.

Im Unterschied hierzu ist es auch möglich, dass zwischen den Bearbeitungen des Referenzkörpers an den unterschiedlichen Ebenen derselbe nicht gedreht wird, sondern vielmehr die Drehung über die Drehung des Werkzeugs erfolgt und zusätzlich das Werkzeug zur jeweiligen Bearbeitung des Referenzkörpers linear zu demselben verlagert wird.

Wie im Zusammenhang mit Fig. 1 gezeigt, wird als Referenzkörper 10 vorzugsweise ein Quader oder ein anderer einfacher Referenzkörper verwendet.

Beim Referenzkörper 10 handelt es sich vorzugsweise um einen metallischen Referenzkörper, der zumindest im Bereich der zu bearbeitenden Sollpositionen einen durch die Bearbeitung zu entfernenden und nach der Bearbeitung erneuerbaren Werkstoff trägt. Bei dem erneuerbaren Werkstoff kann es sich z. B. um Klebstoff handeln. Hierdurch ist es dann möglich, ein und denselben Referenzkörper mehrfach zur erfindungsgemäßen Bestimmung der Nulllage einer mehrachsigen Bearbeitungsmaschine zu verwenden.

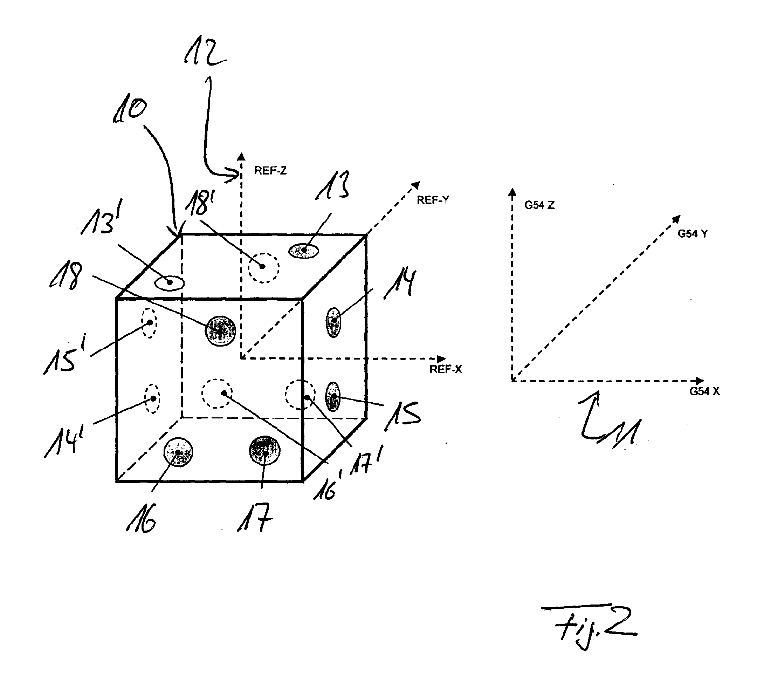

Fig. 2 visualisiert eine Weiterbildung des erfindungsgemäßen Verfahrens, bei welchem der Referenzkörper 10 zusätzlich zu den sechs ersten Sollpositionen 13 bis 18 der Fig. 1 an weiteren sechs zweiten Sollpositionen 13' bis 18' bearbeitet wird, die vorzugsweise spiegelsymmetrisch zu den sechs ersten Sollpositionen 13 bis 18 über drei nicht parallele Ebenen des Referenzkörpers 10 verteilt sind.

Dabei sind gemäß Fig. 2 die zweiten Sollpositionen 13' bis 18' ebenso wie die ersten Sollpositionen 13 bis 18 im Sinne einer 3/2/1-Verteilung über nicht parallele Ebenen des Referenzkörpers 10 verteilt.

Wie bereits ausgeführt, erfolgt nach der Bearbeitung des Referenzkörpers 10 an seinen Sollpositionen eine Vermessung desselben an den bearbeiteten Istpositionen, wobei aus den Sollpositionen und den Istpostionen der Bearbeitung mit Hilfe von Ausgleichsrechnungen eine Referenzlage zwischen dem Maschinenkoordinatensystem 11 und dem Referenzkoordinatensystem 12 ermittelt wird. Der konkret verwendete Typ einer Ausgleichsrechnung hängt insbesondere von der Art der Verteilung der Sollpositionen über die nicht parallelen Ebenen des Referenzkörpers 10 ab. So kann dann, wenn die Sollpositionen im Sinne einer 3/2/1-Verteilung über die Ebenen des Referenzkörpers 10 verteilt sind, ein aus der Praxis bekannter 3/2/1-Probing-Algorithmus zur Berechnung der Relativposition zwischen dem Referenzkoordinatensystem 12 und dem Maschinenkoordinatensystem 11 verwendet werden. Ein anderer einsetzbarer Algorithmus zur Ermittlung der Relativposition zwischen den Koordinatensystemen 11, 12 ist in der noch nicht veröffentlichten Patentanmeldung DE 10 2008 007 127.7 beschrieben, auf die hier durch Verweis explizit Bezug genommen wird.

Dann, wenn wie Fig. 2 zeigt, zwei Sätze aus jeweils sechs Sollpositionen 13 bis 18 und 13' bis 18' zur Bearbeitung des Referenzkörpers vorgesehen werden, erfolgt für jeden Satz der Sollpositionen 13 bis 18 und 13' bis 18' und der jeweiligen messtechnisch erfassten Istpositionen eine getrennte Ausgleichsrechnung, um so auf redundante Art und Weise die Relativposition zwischen den Koordinatensystemen 11 und 12 zu ermitteln. Hierdurch kann die Genauigkeit des erfindungsgemäßen Verfahrens erhöht werden.

Das erfindungsgemäße Verfahren ist sowohl bei fünfachsigen Bearbeitungsmaschinen als auch bei sechsachsigen Bearbeitungsmaschinen einsetzbar. Dann, wenn das Verfahren an einer sechsachsigen Bearbeitungsmaschine zum Einsatz kommt, erfolgt bei Verwendung des Referenzkörpers 10 der Fig. 1 zunächst eine Bearbeitung desselben im Bereich der Sollposition 13, anschließend wird derselbe um die Y-Achse und Z-Achse um jeweils 90° gedreht, um dann die Bearbeitung desselben an den Sollpositionen 16, 17 und 18 vorzunehmen, wobei darauffolgend der Referenzkörper 10 um die X-Achse um 90° gedreht wird, um anschließend die Bearbeitung an den Sollpositionen 14 und 15 vorzunehmen. Auch bei einer sechsachsigen Bearbeitungsmaschine hängt jedoch der konkrete Ablauf von der Kinematik der Bearbeitungsmaschine ab.

## Patentansprüche

1. Verfahren zur Bestimmung der Nulllage einer mehrachsigen Bearbeitungsmaschine, nämlich zur Bestimmung der Relativposition zwischen einem in einem theoretischen Nullpunkt der Bearbeitungsmaschine aufgespannten Maschinenkoordinatensystem und einem in einem physikalischen Nullpunkt der Bearbeitungsmaschine aufgespannten Referenzkoordinatensystem, mit zumindest den folgenden Schritten:
a) Einspannen eines Referenzkörpers in die Bearbeitungsmaschine, wobei eine theoretische Relativposition zwischen dem Referenzkoordinatensystem und dem Maschinenkoordinatensystem bekannt ist;
b) Bearbeiten des Referenzkörpers mit einem Werkzeug der Bearbeitungsmaschine an mindestens sechs Sollpositionen, die über mindestens drei jeweils nichtparallele Ebenen des Referenzkörpers verteilt sind;
c) Vermessen des Referenzkörpers an den mindestens sechs bearbeiteten Istpositionen;
d) Errechnen der tatsächlichen Relativposition zwischen dem Referenzkoordinatensystem und dem Maschinenkoordinatensystem aus den Sollpositionen und Istpositionen der Bearbeitung des Referenzkörpers.

2. Verfahren nach Anspruch 1,
**dadurch gekennzeichnet, dass**
das in Schritt b) zumindest sechs erste Sollpositionen derart über die mindestens drei jeweils nichtparallelen Ebenen des Referenzkörpers verteilt werden, dass der Referenzkörpers in einer ersten Ebene an einer ersten Sollposition, in einer zweiten Ebene an zwei ersten Sollpositionen und in einer dritten Ebene an drei ersten Sollpositionen bearbeitet wird.

3. Verfahren nach Anspruch 1,
**dadurch gekennzeichnet, dass**
das in Schritt b) zumindest sechs erste Sollpositionen derart über die mindestens drei jeweils nichtparallelen Ebenen des Referenzkörpers verteilt werden, dass der Referenzkörpers in einer ersten Ebene an zwei ersten Sollpositionen, in einer zweiten Ebene an zwei ersten Sollpositionen und in einer dritten Ebene an zwei ersten Sollpositionen bearbeitet wird.

4. Verfahren nach Anspruch 1,
**dadurch gekennzeichnet, dass**
das in Schritt b) zumindest sechs erste Sollpositionen derart über die mindestens drei jeweils nichtparallelen Ebenen des Referenzkörpers verteilt werden, dass der Referenzkörpers in einer ersten Ebene an einer ersten Sollposition, in einer zweiten Ebene einer ersten Sollposition und in einer dritten Ebene an vier ersten Sollpositionen bearbeitet wird.

5. Verfahren nach einem der Ansprüche 2 bis 4,
**dadurch gekennzeichnet, dass**
das in Schritt b) der Referenzkörper zusätzlich an zumindest sechs zweiten Sollpositionen bearbeitet wird, die spiegelsymmetrisch zu den zumindest sechs ersten Sollpositionen über nichtparallele Ebenen des Referenzkörpers verteilt werden.

6. Verfahren nach einem der Ansprüche 1 bis 5,
**dadurch gekennzeichnet, dass**
das in Schritt b) zwischen den Bearbeitungen des Referenzkörpers in den unterschiedlichen Ebenen der Referenzkörper jeweils um mindestens eine Achse gedreht wird, wohingegen das Werkzeug zwischen den Bearbeitungen des Referenzkörpers nicht gedreht sondern vielmehr zur jeweiligen Bearbeitung des Referenzkörpers linear zu demselben verlagert wird.

7. Verfahren nach einem der Ansprüche 1 bis 5,
**dadurch gekennzeichnet, dass**
das in Schritt b) zwischen den Bearbeitungen des Referenzkörpers in den unterschiedlichen Ebenen der Referenzkörper nicht gedreht wird, wohingegen das Werkzeug zwischen den Bearbeitungen des Referenzkörpers jeweils um mindestens eine Achse gedreht und weiterhin zur jeweiligen Bearbeitung des Referenzkörpers linear zu demselben verlagert wird.

8. Verfahren nach einem der Ansprüche 1 bis 7,
**dadurch gekennzeichnet, dass**
ein Referenzkörper verwendet wird, der zumindest an den Sollpositionen einen durch die Bearbeitung zu entfernenden, nach der Bearbeitung erneuerbaren Werkstoff trägt.

9. Verfahren nach einem der Ansprüche 1 bis 8,
**dadurch gekennzeichnet, dass**
der Referenzkörper metallisch und der erneuerbare Werkstoff ein Klebstoff ist.

10. Verfahren nach einem der Ansprüche 1 bis 9,
**dadurch gekennzeichnet, dass**
als Referenzkörper ein Quader verwendet wird.
